(19) Europäisches Patentamt
European Patent Office
Office européen des brevets

(11) Publication number: **0 376 411 A2**

# (12) EUROPEAN PATENT APPLICATION

(21) Application number: 89203338.2

(22) Date of filing: 28.12.89

(51) Int. Cl.5: C08F 218/08, C09D 131/04, //(C08F218/08,218:10,228:00)

(30) Priority: 30.12.88 GB 8830369

(43) Date of publication of application: 04.07.90 Bulletin 90/27

(84) Designated Contracting States: BE CH DE ES FR GB IT LI NL SE

(71) Applicant: SHELL INTERNATIONALE RESEARCH MAATSCHAPPIJ B.V.
Carel van Bylandtlaan 30
NL-2596 HR Den Haag(NL)

(72) Inventor: Sonderman, Marc Stephen
Louvain-la-Neuve
B-1348 Ottignies(BE)
Inventor: Scholten, Henricus P. H., c/o Shell Research B.V.,
Chemical Research Centre, Avenue Jean Monnet 1,
B-1348 Ottignies-Louvain-La-Neuve(BE)
Inventor: Vermeulen, Jan
Louvain-la-Neuve
B-1348 Ottignies(BE)
Inventor: Coppin, Linda Louise-Marie Guillaund
Louvain-la-Neuve
B-1348 Ottignies(BE)

(74) Representative: Aalbers, Onno et al
P.O. Box 302
NL-2501 CH The Hague(NL)

## (54) Vinyl ester latices.

(57) The free monomer content of latices formed by emulsion polymerization of vinyl acetate and the vinyl ester(s) of branched chain carboxylic acid(s) can be reduced by the presence of an amount of from 0.1 to 5% by weight based on the total weight of components (a), (b) and (c) of an alkali metal or alkaline earth metal vinyl sulphonate and preferably in an amount of from 0.75% to 5% by weight.

EP 0 376 411 A2

# VINYL ESTER LATICES

This invention relates to latices containing interpolymers of vinyl acetate and the vinyl ester(s) of branched chain carboxylic acid(s), to the preparation of such latices, to coating compositions comprising such latices and to solid polymeric products, for example coatings and redispersible latex powders, formed by the drying of such latices.

Latices containing an interpolymer of vinyl acetate and the vinyl ester(s) of one or more tertiary carboxylic acid(s) have good properties for use in coating applications, for example as bases for matt and silk finish emulsion paints, and, as such or when dried to form latex powders, in mortar mixes. However, in the preparation of such latices a substantial amount of the monomers available is not polymerized. The presence of free monomers in the latices is considered disadvantageous. The free monomers are believed to contribute substantially to the odour of the latices and latex powders, to have a deleterious effect on latex stability and, in the context of coating applications, to have a deleterious effect on the hardness, outdoor durability and blocking resistance of films formed by drying of the latices. Further, from the point of view of toxicity it is desirable to minimize free monomers.

It is known to attempt to reduce the monomer content of a latex by mechanical methods which aid the evaporation of the monomers. For example, GB 1508813 describes a spraying method and GB 1494249 describes a method in which a gas is passed through a rotating cylinder along whose inner wall the latex flows. Chemical modification has also been used in an attempt to minimize free monomer content as described, for example, in DE 2349602 and DE 2348585, for latices based on butyl acrylate, ethyl acrylate or methyl acrylate.

In US patent No. 3,654,209 there are disclosed latices formed by emulsion polymerization of vinyl acetate, 2-ethylhexylcarboxylic acid vinyl ester and/or Versatic acid vinyl esters in the presence of mixtures of several copolymerizable stabilizers, surface active agents and polymerization catalysts, such as nonylphenolpolyglycol ether with ethylene oxide units or isotridecylalcohol polyglycol ether with ethylene oxide units, potassium persulphate, and sodium vinyl sulphonate, acrylic acid and acrylamide. (Versatic acid is a trade mark.)

From the beforementioned US patent and more particularly from the comparative examples in connection with the claimed process, a person skilled in the art may only derive that balanced combinations of vinyl sulphonic acid, acrylic acid and acrylamide in sufficient concentrations must be applied for obtaining acceptable latices. Moreover, this patent clearly teaches a skilled person to carry out the emulsion polymerization in at least two steps in order to safeguard that the monomer content in the reactor does not exceed 25% by weight referred to the reaction mixture and preferably 15% by weight.

It will be appreciated by persons skilled in the art that from the beforementioned US patent not any teachings may be derived relating to the manufacture of latices, comprising a substantially increased amount of vinyl esters of Versatic acids such as VeoVa 9 and 10 (VeoVa is a trade mark) without the hereinbefore mentioned disadvantageous free monomer contents and showing an acceptable stability.

Moreover it will be appreciated that these problems of the free monomer contents in the final latex compositions become only more pronounced due to the application of such desired higher versatic acid vinyl esters proportions of the total monomer mixture.

On the other hand there is still a growing need for a more simple process for the preparation of latices, having an acceptable low free monomer content and an acceptable stability.

Therefore, there is a still growing need for latices showing an acceptable low free monomer content derived from vinyl acetate and Versatic acid vinyl esters, manufactured by a simplified process and more preferably for latices, showing a substantially increased Versatic acid vinyl esters proportion as to vinyl acetate, and their preparation. A known simplification is the use of acrylic acid as the sole stabilizing monomer. This leads to stable latices but in many cases also insufficient monomer conversion, as shown in the reference examples.

As a result of extensive research and experimentation there could surprisingly be developed a simplified process providing such desired latices.

In accordance with the present invention there is provided a process for the manufacture of a latex, which comprises subjecting to emulsion polymerization conditions an aqueous reaction mixture comprising (a) vinyl acetate, (b) the vinyl ester(s) of one or more tertiary aliphatic carboxylic acid(s), (c) an alkali metal or alkaline earth metal vinyl sulphonate in an amount of 0.1 to 5% by weight based on the total weight of components (a), (b) and (c).

It has been surprisingly found that by the use of only one copolymerizable stabilizer as component (c) latices could be manufactured, showing an acceptable low free monomer content and a good stability.

Moreover, it was found that these attractive results could be reached by effecting as well redox initiation and thermal initiation of the starting reaction mixture rather independent on the actual relative proportions of components (a) and (b). More preferably redox initiation of the reaction mixture is applied.

Moreover, it was found that the attractive latices could be obtained by using aqueous reaction mixtures, which are substantially free of stabilizing colloids and that the comonomers could be added continuously and had not to be added to the reaction mixture stepwise during the polymerization.

The components (a) and (b) may be present in a large range of relative proportions of these components and more particularly in the range of from 100 parts (a):100 parts (b) to 100 parts (a):900 parts (b) and more preferably in the range of from 100 parts (a):200 parts (b) to 100 parts (a):500 parts (b).

Since high free monomer content of latices is most pronounced, and is most likely to generate adverse consumer reaction, in high quality latices, that is, in latices in which there is a high proportion of component (b) present, it may be stated that the weight of component (b) is preferably equal to or greater than that of component (a), for example, the weight of component (b) being in the range 1-9 times that of component (a). A preferred weight range is 100 parts (a):200-500 parts, especially 200-400 parts (b).

As component (c), a vinyl sulphonate may be used selected from sodium vinyl sulphonate, potassium vinyl sulphonate, lithium vinyl sulphonate, calcium vinyl sulphonate or barium vinyl sulphonate, of which sodium vinyl sulphonate being preferred.

Preferably the vinyl sulphonate is used in an amount of from 0.75 to 5% by weight based on the total weight of the components (a), (b) and (c) and more preferably in an amount of from 1 to 3% by weight in the case of thermal initiation and in an amount of from 0.1 to 0.5% by weight in the case of redox initiation.

The component(s) (b) may be represented by the general formula

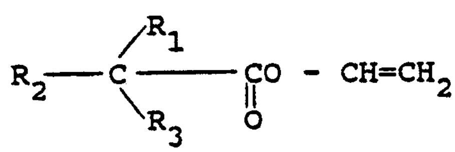

where each group R is an alkyl group. Preferably, the groups R of such ester(s) contain 3-20 carbon atoms in total more preferably 3 to 13 carbon atoms and most preferably predominantly 7 or 8 carbon atoms.

The component (b) may be a single chemical compound but more commonly, as a consequence of the preparation of such products, will be a mixture of isomers which vary in the branching in the aliphatic moiety.

Particularly preferred components (b) are sold under the trade marks "VeoVa 9" and "VeoVa 10", and comprise a number of isomers in which the acid moiety contains 9 and 10 carbon atoms respectively and a small amount of close homologues.

The constituents (a) and (b) are the major constituents of the interpolymer contained in a latex produced in accordance with the present invention but similar products may be prepared which contain small amounts, preferably not more than 20% by weight based on the total weight of components (a) and (b), of further copolymerized constituent(s). Such products fall within the scope of this invention. Preferably, however, such interpolymers are composed substantially entirely of the components previously described.

Emulsion polymerization conditions are known in the art and generally involve a temperature of 40-100 °C. More particularly temperatures of from 40-70 °C are applied when redox initiation is employed whereas temperatures of 60-100 °C are applied when thermal initiation is employed.

It will be appreciated by a person skilled in the art that in case of thermal initiation amounts of component (c) are to be used to reach the most attractive results, which are greater than 0.5%, whereas in the case of redox initiation amounts of (c) being 0.5% already provide the advantageous results.

In the reaction mixture additional stabilizers, optionally to be copolymerized, one or more polymerization initiators and optionally buffering agents are to be included.

Stabilizers suitably constitute about 1-4% by weight of the latex in total. It is preferred that the stabilizers used in the latex comprise at least one anionic surface active agent, which is believed to have a beneficial effect on the stability of the latex and in particular on the reaction mixture during the polymerization process, facilitating the formation of micelles in which the interpolymer is formed, and at least one non-ionic surface active agent, which is believed to contribute to latex stability; or at least one surface active agent of the mixed anionic/non-ionic type.

Suitable anionic surface active agents include alkylaryl sulphonates, for example alkylbenzene sulphonates; salts of sulphosuccinic esters; alkyl sulphates, alkyl sulphonates, sulphates of hydroxyethyl esters of monocarboxylic acids, sulphates of alkylphenoxypolyethoxyethanols, sulphates and sulphonates of

hydroxypropyl esters of monocarboxylic acids and sulphates of monoglycerides of monocarboxylic acids, such compounds having 12-24 carbon atoms; and salts of $C_{9-19}$ monocarboxylic acids. Suitably 0.05-1% by weight of the latex may be constituted by anionic surface active agents, preferably 0.1-0.5%.

Suitable non-ionic surface active agents include reaction products of hydroxy compounds with alkylene oxides, such as ethylene oxide or propylene oxide, for example a compound of the general formula $R-C_6H_4-O-(CH_2-CH_2-O)_n-H$ where R represents a $C_{6-16}$, especially $C_{8-9}$, alkyl group and n represents a number from 3 to 40; reaction products of ethylene oxide with propylene glycol ethers, or with monocarboxylic acids, suitably of 6-20 carbon atoms, for example lauric acid, palmitic acid or stearic acid, or with alcohols, suitably of 6-20 carbon atoms, for example octyl, lauryl or cetyl alcohol. Suitably 0.5-2% of the weight of the latex may be constituted by non-ionic surface active agents.

Suitable surface active agents of the mixed anionic/non-ionic type include sulphonates based on alkylaryl polyglycol ethers.

Preferably both an anionic and a non-ionic surface active agent are used. Especially preferred is the use of an alkylaryl sulphonate together with a compound $R-C_6H_4-O-(CH_2-CH_2-O)_n-H$, for example nonyl phenol ethoxylate.

Suitable initiators are compounds which form free radicals under the reaction conditions for the emulsion polymerization, whether by thermal breakdown, redox reaction or photo initiation. Initiators include peroxides, hydroperoxides, persulphates, peroxydiphosphates or diazo compounds. Examples are benzoyl peroxide, ditertiary butyl peroxide, hydrogen peroxide, alpha,alpha′-azo-isobutyric nitrile and sodium, ammonium or, especially, potassium persulphate. 0.1-1%, preferably 0.2-0.5% of initiator, based on weight of the reaction mixture, is suitably employed. Compounds which cause redox decomposition of above-named 'per' initiators include salts of reducing acids of sulphur, suitably alkali metal sulphites, (for example $Na_2SO_3$), alkali metal bisulphites, (for example $NaHSO_3$), alkali metal metabisulphites, (for example $Na_2S_2O_5$), alkali metal thiosulphates, (for example $Na_2S_2O_3$), alkali metal formaldehyde sulphoxylates, (for example $Na[HSO_2.CH_2O]$) and, the preferred class, alkali metal dithionites (for example $Na_2S_2O_4$). Such compounds, when used, may constitute 0.1-0.5% of the weight of the reaction mixture.

The polymerization is suitably effected at 60-100 °C when thermal initiation is used; and at 40-70 °C when redox initiation is used. When redox initiation is used the reaction is carried out in an inert atmosphere, nitrogen suitably being used to flush out the reaction vessel prior to commencement of the reaction and air being excluded from the vessel during the reaction.

Buffering agents suitable for use in the polymerization process are water-soluble compounds which can prevent the pH of the mixture falling below about 4. Preferred buffering agents include borax and an organic acid, suitably acetic acid or acrylic acid, or an alkali metal carbonate or bicarbonate, or acetate. If acrylic acid is employed in the buffer it will be copolymerized, conferring stability on the latex, and the pH may need to be increased once polymerization is complete.

A further aspect of the present invention relates to a latex produced by the process described above, and the interpolymer which forms on physical drying of such a latex, for example to form a coating on a substrate or a powder intended for reconstitution as a latex or use in a mortar or other latex based end product. Suitably, the interpolymer comprises 25-70% of the weight of the latex, preferably 40-60%.

Latices in accordance with the invention may find application in various fields, for example in paper and textile coatings, adhesives, polishes, mortars, sealants, putties, lacquers and paints and more particularly textured coatings. They are of particular interest for composing lacquers and paints due their good film forming properties, their water resistance, their high pigment binding power, the lack of tackiness of the films, their alkali resistance and resistance to ultra violet light. Paints containing the latices of the invention contain pigments, and will commonly contain further constituents, examples being fillers, co-solvents, thickeners, dispersants, preservatives, corrosion inhibitors, and anti-foaming agents.

It will be appreciated therefore that coating compositions, comprising the latices according to the present invention and solid interpolymer product formed thereof, also form an aspect of the present invention.

The invention will now be further described with reference to the following examples.

A) Examples of latex preparation - thermal initiation

Procedure

| Ingredients | parts wt | |
|---|---|---|
| Initial reactor charge: | 25.0 | Water, demineralised |
| | 0.5 | "Humifen SF 90"+ (10% aq. sol.) |
| | 2.0 | "Arkopal N 230"+ (25% aq. sol.) |
| | 0.1 | Potassium persulphate |
| Aqueous pre-emulsion phase: | 60.0 | Water |
| | 9.5 | "Humifen SF 90"+ (10% aq. sol.) |
| | 6.0 | "Arkopal N 230"+ (25% aq. sol.) |
| | 0.4 | Potassium persulphate |
| | 0.4 | Potassium carbonate |
| Monomer mixture: | 40.0 | "VeoVa 10"+ |
| | 30.0 | "VeoVa 9"+ |
| | 30.0-x | Vinyl acetate |
| | x | Sodium vinyl sulphonate |

\+ "Humifen SF 90" is a trade mark for an alkylaryl sulphonate anionic surfactant.
"Arkopal N 230" is a trade mark for a non-ionic surfactant.
"VeoVa 9" and "VeoVa 10" are trade marks of SHELL for vinyl esters of tertiary carboxylic acids.

Experimental procedure

A monomer pre-emulsion was prepared by adding the monomer mixture to the agitated aqueous phase. The initial reactor charge was heated. As soon as the temperature of the reactor charge reached 80 °C, the addition of monomer pre-emulsion was started. The addition of the pre-emulsion was started at low rate. The total addition time was about 3 hours. At the end of the addition period the temperature of the reaction mixture was maintained at 80 °C for a further two hours. The latex was cooled and filtered.

The hereinbefore described procedure was followed for the preparation of latex compositions 1, 2 and 3 according to the invention and the comparative composition A, as specified in

Table I

| latex composition example | parts wt (x) of sodium vinyl sulphonate | monomer conversion in % of total monomer intake |
|---|---|---|
| 1 | 0.5 | 99.1 |
| 2 | 1.0 | 99.5 |
| 3 | 2.0 | 99.5 |
| (comp) A | - <br> 1.0 parts wt of acrylic acid were added | 99.0 |

B) Examples of latex preparation - redox initiation

Procedure

| Ingredients | parts wt | |
|---|---|---|
| Initial reactor charge: | 25.0 | Water, demineralised |
| | 0.6 | "Humifen SF 90" |
| | 0.06 | Sodium dithionite ($Na_2S_2O_4$) |
| | 0.09 | Potassium persulphate |
| | 0.05 | Sodium bicarbonate |
| Initiator solution: | 10.0 | Water, demineralised |
| | 0.29 | Sodium dithionite |
| | 0.25 | Sodium bicarbonate |

| | | |
|---|---|---|
| Aqueous pre-emulsion phase: | 50.0 | Water, demineralised |
| | 0.4 | "Humifen SF 90" |
| | 10.0 | "Arkopal N 230" (25% aq. sol.) |
| | 0.43 | Potassium persulphate |
| | x | Sodium vinyl sulphonate |
| Monomer mixture: | 30.0-x | Vinyl acetate |
| | 40.0 | "VeoVa 10" |
| | 30.0 | "VeoVa 9" |

Experimental procedure

The reactor was flushed carefully with nitrogen and a small stream of nitrogen was maintained during the polymerization.

The initial reactor charge was prepared as follows:

The anionic surfactant and sodium dithionite were dissolved in the amount of water required. When these were completely dissolved the potassium persulphate and sodium bicarbonate were added. The aqueous pre-emulsion was prepared as follows: the anionic and non-ionic surfactants, the potassium persulphate and the sodium vinyl sulphate were dissolved in the amount of water required.

The monomers were then added to the agitated aqueous phase.

The initial reactor charge was introduced into the reactor and heated to a temperature of 55 °C. Separate additions of the monomer pre-emulsion mixture and the initiator solution were started. The monomer pre-emulsion was added at low rate such that addition time was about 3 hours. The initiator solution was added at such a rate that the addition took 3.5 hours respectively. After the initiator addition was completed the temperature was held at 55 °C for another 1.5 hours. The latex was cooled and filtered.

The described procedure was followed for the preparation of latex compositions 3-5 according to the invention and comparative composition B, as specified in Table II.

TABLE II

| latex composition example | parts wt (x) of sodium vinyl sulphonate | monomer conversion in % of total monomer intake |
|---|---|---|
| 3 | 0.5 | 99.0 |
| 4 | 1.0 | 97.8 |
| 5 | 2.0 | 98.9 |
| (comp) B | - | 96.8 |
| | 0.5 parts wt of acrylic acid were added | |

Analysis and results

The latices prepared as described above were analysed for the content of free vinyl esters, as follows:

A sample of latex was reacted at 0-5 °C with an excess of a solution of bromine in acetic acid. The excess bromine was then determined iodometrically with sodium thiosulphate solution.

A suitable weight of the sample, or a known quantity of the diluted sample, was introduced into a 250 ml conical flask and dissolved in 50 ml glacial acetic acid. The flask was stoppered and immersed in ice for ten minutes. 10 ml of a bromine solution (prepared by dissolving 0.26 ml bromine in 1 litre of acetic acid) was then added via an automatic pipette. The flask was closed and the contents swirled gently and replaced in the icebath for another three minutes. 10 ml potassium iodide solution and 100 ml distilled water, both precooled in ice, were then added and homogenised. The liberated iodine was titrated immediately against a 0.01 M sodium thiosulphate solution using starch solution to detect the end point. A blank determination was carried out in the same manner, omitting the sample.

The weight percentages of free monomers in the latex samples and the monomer conversion in % of the total monomer intake were then readily calculable.

The monomer conversions have been indicated in the preceding table I and II.

## Claims

1. A process for the preparation of a latex, which comprises subjecting to emulsion polymerization conditions an aqueous mixture comprising (a) vinyl acetate, (b) the vinyl ester(s) of one or more tertiary aliphatic carboxylic acid(s), (c) an alkali metal or alkaline earth metal vinyl sulphonate in an amount of from 0.1 to 5% by weight based on the total weight of components (a), (b) and (c).

2. A process according to claim 1, wherein the aqueous reaction mixture is substantially free of stabilizing colloids.

3. A process according to claim 1, wherein the relative proportions by weight of components (a) and (b) in the aqueous mixture are in the range of from 100 parts (a):900 parts (b).

4. A process according to claim 3, wherein said proportions are in the range of from 100 parts (a):200

parts (b) to 100 parts (a):500 parts (b).

5. A process according to any one of the claims 1-4, wherein the interpolymeric constituent is 25-70% of the weight of the latex.

6. A process according to claim 5, wherein the interpolymeric constituent is 40-60% of the weight of the latex.

7. A process according to any one of the claims 1-6, wherein thermal initiation or redox initiation of the starting reaction mixture is effected.

8. A process according to any one of the claims 1-7, wherein component (c) is sodium vinyl sulphonate.

9. A process according to any one of the claims 1-8, wherein component (c) is present in an amount of from 0.75-5% by weight, when thermal initiation is applied.

10. A process according to claim 9, wherein component (c) is present in an amount of from 1 to 3% by weight.

11. A process according to any one of the claims 1-8, wherein component (c) is present in an amount of from 0.1 to 0.5% by weight, when redox initiation is applied.

12. A latex containing as polymeric constituent 25-70% by weight of an interpolymer of (a) vinyl acetate, (b) the vinyl ester(s) of one or more tertiary aliphatic carboxylic acid(s) and (c) an alkali metal or alkaline earth metal vinyl sulphonate in an amount of from 0.1 to 5% by weight based on the total weight of components (a) and (b).

13. A latex according to claim 12, wherein the amount of polymeric constituent is 40-60% by weight.

14. A latex according to any one of the claims 12 and 13, wherein the relative proportions by weight of components (a) and (b) in the aqueous mixture are in the range of from 100 parts (a):100 parts (b) to 100 parts (a):900 parts (b).

15. A latex according to claim 14, wherein the relative proportions by weight of components (a) and (b) are in the range of from 100 parts (a):200 parts (b) to 100 parts (a):500 parts (b).

16. Coating compositions comprising a latex according to any one of the claims 12-15 and at least one pigment.

17. A solid interpolymeric product formed by the physical drying of a latex according to claims 12-15.

18. A solid interpolymeric product formed by the physical drying of a coating according to claim 16.

19. Redispersable latex powders, formed by physical drying of the latices according to claims 12-15.

20. Coating composition based on powders according to claim 19.